# EUROPÄISCHE PATENTSCHRIFT

(11) **EP 2 154 445 B1**
(45) Veröffentlichungstag und Bekanntmachung des Hinweises auf die Patenterteilung: **08.11.2017**
(21) Anmeldenummer: 09166809.5
(22) Anmeldetag: 30.07.2009
(51) Int. Cl.: F24H 9/06, B29C 45/16, H02G 3/08

(54) **Befestigungsvorrichtung eines elektrischen Durchlauferhitzers**
Fixing device of an electric percolator
Dispositif de fixation d'un chauffe-eau électrique instantané

(30) Priorität: 14.08.2008 DE 102008037679
(43) Veröffentlichungstag der Anmeldung: 17.02.2010
(73) Patentinhaber: BSH Hausgeräte GmbH, 81739 München (DE)
(72) Erfinder: Bauer, Franz, 83374 Traunwalchen (DE); Englisch, Christian, 83324 Ruhpolding (DE); Gruber, Michael, 83362 Surberg (DE)

(56) Entgegenhaltungen:
- EP-A2- 1 624 259
- DE-B3-102006 015 127
- DE-U1- 9 321 639
- DE-U1- 29 824 850

## Beschreibung

Die vorliegende Erfindung betrifft eine Befestigungsvorrichtung eines elektrischen Durchlauferhitzers mit einem Grundträger, der an einer Wand zu befestigen ist, wobei der Grundträger durch eine Gehäuserückwand gebildet wird, und einer Trennplatte, die den Durchlauferhitzer in einen Nass- und einen Trockenraum unterteilt, wobei die Trennplatte aus mindestens zwei in einem Zwei- oder Mehrkomponenten-Spritzgussverfahren erstellten Materialkomponenten besteht.

Befestigungsvorrichtungen für elektrische Durchlauferhitzer mit einem Grundträger und einer Trennplatte sind im Stand der Technik bekannt. So beschreibt in beispielhafter Weise die DE 198 45 859 B4 ein elektrisches Haustechnikgerät mit Trennwand. Nachteilig ist dabei, dass bei der Montage der Geräterückwand die passende Trennwand ausgesucht werden muss. Wird dabei eine nicht passende Trennwand ausgesucht, so führt es unter Umständen zu Verzögerungen bei der Montage oder, wenn der Fehler nicht bemerkt wird, zu Montagefehlern mit teils erheblichen Sicherheitsrisiken. Dies so weit gehen, dass der vorgeschriebene Spritzwasserschutz bzw. Strahlwasserschutz nicht mehr eingehalten werden kann, ohne dass der Fachmann dies bemerkt.

Dokument DE 10 2006 015 B3 offenbart die Merkmale des Oberbegriffs von Anspruch 1. Hiervon ausgehend ist es Aufgabe der vorliegenden Erfindung, einen elektrischen Durchlauferhitzer mit einem Grundträger und einer Trennplatte zur Verfügung zu stellen, die eine verbesserte Montagefreundlichkeit aufweist.

Gelöst wird diese Aufgabe erfindungsgemäß mit den Merkmalen des Patentanspruches 1.

Vorteilhafte Aus- und Weiterbildungen der Erfindung, welche einzeln oder in Kombination miteinander eingesetzt werden können, sind Gegenstand der Unteransprüche.

Der erfindungsgemäße elektrische Durchlauferhitzer baut auf gattungsgemäßen Durchlauferhitzern dadurch auf, dass die Trennplatte an den Grundträger über Stege angespritzt ist, dergestalt dass durch Verdrehen der Trennplatte entlang der Stege die Trennplatte von dem Grundträger separiert werden kann. Dadurch wird eine gegenüber dem Stand der Technik deutlich verbesserte Montagefreundlichkeit erzielt.

Dadurch, dass die Trennplatte an den Grundträger angespritzt ist, wird gewährleistet, dass bei der Montage des Grundträgers stets die passende Trennplatte zur Verfügung steht. Verwechslungen bzw. der Einbau einer nicht passenden Trennplatte kann dadurch vermieden werden. Auch ist die Trennplatte dadurch verliersicher gelagert, wodurch ein Verlust der Trennplatte während des Transports vermieden werden kann. Dadurch, dass der Grundträger sowie die Trennplatte in einem Schuss gefertigt werden können, werden Montagekosten eingespart. Beide Teile können in einem Werkzeug realisiert werden, und kostengünstig erstellt werden. Das Separieren der beiden Bauteile kann sowohl nach dem Fertigungsprozess, z. B. direkt bei der Montage, als auch direkt an der Linie erfolgen.

In einer bevorzugten Ausführungsform weist der elektrische Durchlauferhitzer wenigstens eine Tülle auf. Dies ermöglicht eine umfassende Abdichtung, so dass Kabel wassergeschützt durch die Trennwand hindurch verlegt werden können.

Es hat sich auch als vorteilhaft erwiesen, wenn die Trennwand als Einschubteil in eine Gehäusehaube, die den elektrischen Durchlauferhitzer abdeckt, eingesteckt werden kann.

Von Vorteil ist es auch, wenn die Trennwand durch Rippen verstärkbar ist. In einer bevorzugten Ausführungsform besitzt die Kabeldurchführungstülle die Form eines vorspringenden Erkers, dessen vorderste Front, in der das Kabel durch sie hindurch tritt, bezüglich der Trennwand leicht schräg angeordnet ist.

Von Vorteil ist es auch, wenn der Grundträger des Durchlauferhitzers des Durchlauferhitzers aus einem transparenten und/oder transluzenten Material gefertigt ist.

In einer bevorzugten Ausführungsform sind an den Grundträgern wenigstens ein Wandabstandshalter und/oder wenigstens ein Montagewerkzeug angespritzt.

Von besonderem Vorteil ist es dabei, wenn das Wandabstandshalterelement bzw. das Montagewerkzeug über ein Steg mit einer Sollbruchstelle zum Herausbrechen mit dem Grundträger verbunden sind.

Vorteilhaft ist es auch, wenn die Tülle der Trennwand einen elastomeren Kunststoff umfasst. Die Verwendung von elastomeren, d.h. formstabilen Kunststoffe bei der Herstellung von Formkörpern gewährleistet, dass der betreffende Formkörper nach einer Verformung stets wieder seine ursprüngliche Form wiedererlangt.

Durch die erfindungsgemäße Befestigungsvorrichtung für einen elektrischen Durchlauferhitzer wird eine gegenüber dem Stand der Technik deutlich verbesserte Montagefreundlichkeit erzielt.

Weitere Vorteile und Ausgestaltungen der Erfindung werden im Einzelnen anhand von Ausführungsbeispielen sowie unter Bezugnahme auf die beiliegenden Zeichnungen erläutert.

Darin zeigen schematisch:
- Fig. 1: eine Frontalansicht einer Gehäuserückwand mit angespritzter Trennwand; sowie
- Fig. 2: eine perspektivische Darstellung einer Gehäuserückwand mit eingeschobener Trennwand; sowie
- Fig. 3: eine Darstellung der Trennwand.

Bei der nachfolgenden Beschreibung der bevorzugten Ausführungsformen der vorliegenden Erfindung bezeichnen gleiche Bezugszeichen gleiche oder vergleichbare Komponenten.

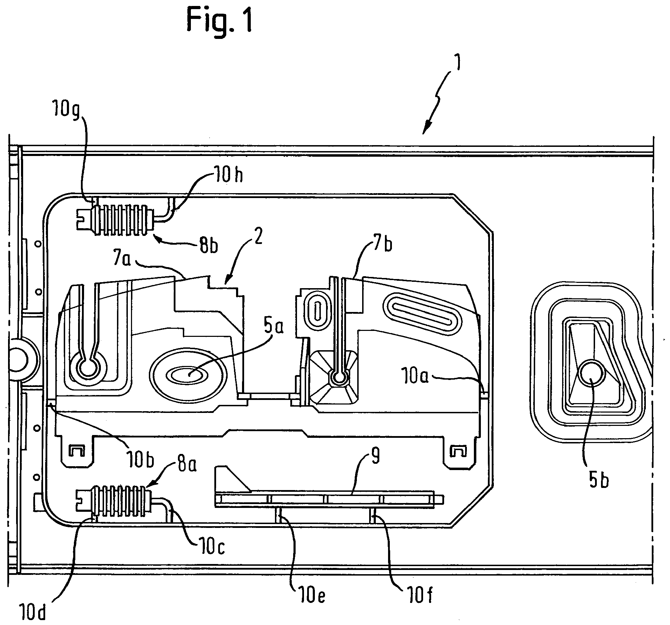

Fig. 1 zeigt eine Draufsicht einer Befestigungsvorrichtung eines elektrischen Durchlauferhitzers. Diese weist einen Grundträger 1 auf, der durch eine Gehäuserückwand gebildet wird. Darüber hinaus weist die Befestigungsvorrichtung eine Trennplatte 2 auf. Die Trennplatte 2 ist über Stege 10a bzw. 10b an den Grundträger angespritzt. Die Trennplatte 2 weist eine Tülle 5a auf. Darüber hinaus weist die Gehäuserückwand 1 eine Tülle 5b auf. Die Trennplatte 2 weist Rippen 7a, 7b auf, die die Trennplatte 2 zusätzlich verstärken. Über Stege 10 c, 10d bzw. 10g und 10h sind Wandabstandshalter 8a und 8b an den Grundträger 1 angespritzt. Darüber hinaus ist über Stege 10e bzw. 10f ein Montagewerkzeug 9 an den Grundträger 1 angeschweißt. Durch einfaches Verdrehen der Trennplatte 2 entlang der Stege kann die Trennplatte 2 von der Gehäuserückwand 1 separiert werden.

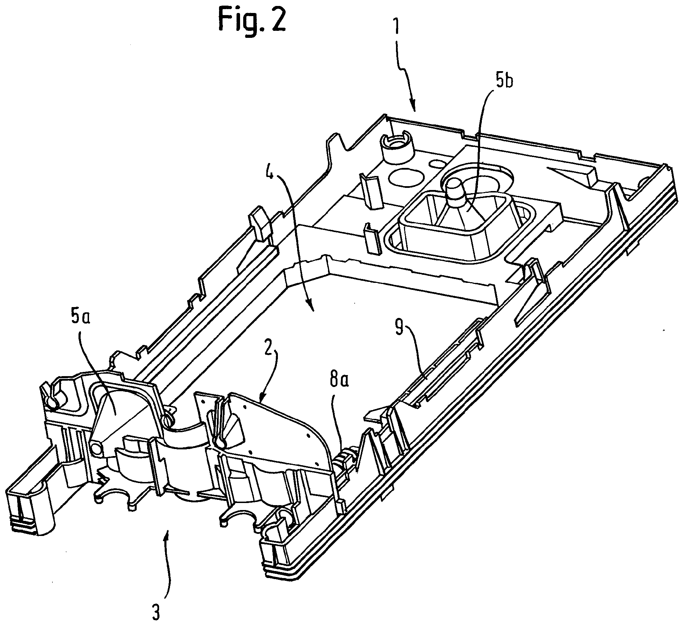

Fig. 2 zeigt in einer perspektivischen Schrägansicht einen Grundträger 1. An dem unteren Teil des Grundträgers 1 wurde eine Trennplatte 2 eingeschoben. Diese Trennplatte 2 weist eine Tülle 5a auf. In dieser eingeschobenen Position unterteilt die Trennplatte 2 den Innenraum eines solchen Durchlauferhitzers in einen Nassraum 3 und einen Trockenraum 4. Nach oben hin wird der Innenraum durch eine Gehäusehaube 6 (nicht abgebildet) begrenzt. Darüber hinaus weist die Gehäuserückwand 1 einen Wandabstandshalter 8 auf, der an die Gehäuserückwand 1 angeschweißt ist. Zusätzlich ist ein Montagewerkzeug 9 an die Gehäuserückwand angeschweißt.

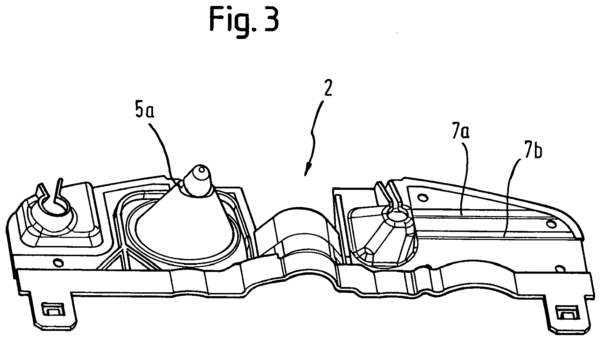

Fig. 3 zeigt in einer perspektivischen Schrägansicht eine Trennplatte 2. Diese weist eine Tülle 5a auf. Diese Tülle 5a ermöglicht eine wasserdichte Abdichtung von Kabeln. Darüber hinaus weist die Trennplatte 2 Rippen 7a und 7b auf. Diese Rippen 7a, 7b verleihen der Trennplatte 2 zusätzliche Stabilität.

Die Erfindung lässt sich wie folgt zusammenfassen: Ziel ist es, eine Rückwand sowie eine Trennplatte für einen Durchlauferhitzer in 2k-Spritzgusstechnik dergestalt herzustellen, dass Werkzeugkosten und Fertigungsaufwand minimiert werden. Die Aussparung in der Rückwand des Durchlauferhitzers ist so ausgeführt, dass die Trennplatte innenliegend mit angespritzt wird. da sowohl die Rückwand als auch die Trennplatte in Hart-Weich-Verbindung herstellbar sind, können beide Bauteile in einem Werkzeug realisiert werden. das Separieren der beiden Bauteile kann sowohl nach dem Fertigungsprozess als auch direkt an der Linie erfolgen. Zusätzlich kann der formgebende Teil der Trennplatte dergestalt ausgeformt sein, dass man diese gegen andere Trennplattenkonturen austauschen kann. Unterschiedliche Trennplatten können dabei zur Designanpassung eingesetzt werden. Durch die Verwendung von nur einem Werkzeug mit Wechseleinsatz für die verschiedenen Trennplattengeometrien werden Werkzeugkosten minimiert und Transportkosten eingespart. Des Weiteren wird durch diese Werkzeugkonfiguration die Zykluszeit für die Fertigung der Bauteile minimiert. Designanpassungen an den Trennplatten sind in vorteilhafter Weise möglich. Bevorzugterweise kann die Trennplatte auch so gefertigt werden, dass diese beim Herstellen der Rückwand sofort herausgebrochen wird und separat mit einer eigenen Materialnummer mitgeschickt wird. Hierdurch werden Verwechslungen vermieden.

Durch die erfindungsgemäße Befestigungsvorrichtung für einen elektrischen Durchlauferhitzer wird eine gegenüber dem Stand der Technik deutlich verbesserte Montagefreundlichkeit erzielt.

### BEZUGSZEICHENLISTE:

- 1: Grundträger/Gehäuserückwand
- 2: Trennplatte/Trennwand
- 3: Nassraum
- 4: Trockenraum
- 5a, 5b: Tülle
- 6: Gehäusehaube
- 7a, 7b: Rippen
- 8a, 8b: Wandabstandshalter
- 9: Montagewerkzeug
- 10a, ...10f: Steg

## Patentansprüche

1. Befestigungsvorrichtung eines elektrischen Durchlauferhitzers, mit einem Grundträger (1), der an einer Wand zu befestigen ist, wobei der Grundträger (1) durch eine Gehäuserückwand gebildet wird, und einer Trennplatte (2), die den Durchlauferhitzer in einen Nassraum (3) und einen Trockenraum (4) unterteilen kann, wobei die Trennplatte (2) aus mindestens zwei in einem Zwei- oder Mehrkomponenten-Spritzgussverfahren erstellten Materialkomponenten besteht, **dadurch gekennzeichnet, dass** die Trennplatte (2) an dem Grundträger (1) über Stege (10a, 10b) angespritzt ist, dergestalt dass durch Verdrehen der Trennplatte (2) entlang der Stege (10a, 10b) die Trennplatte (2) von dem Grundträger (1) separiert werden kann.

2. Befestigungsvorrichtung eines elektrischen Durchlauferhitzers nach Anspruch 1, **dadurch gekennzeichnet, dass** die Trennplatte (2) und/oder die Geräterückwand (1) wenigstens eine Tülle (5) umfassen.

3. Befestigungsvorrichtung eines elektrischen Durchlauferhitzers nach Anspruch 1 oder 2, **dadurch gekennzeichnet, dass** die Trennplatte (2) als Einschubteil in eine Gehäusehaube (6), die den elektrischen Durchlauferhitzer abdichtet, einsteckbar ist.

4. Befestigungsvorrichtung eines elektrischen Durchlauferhitzers nach einem der vorhergehenden Ansprüche, **dadurch gekennzeichnet, dass** die Trennplatte (2) durch Rippen (7a, 7b) verstärkbar ist.

5. Befestigungsvorrichtung eines elektrischen Durchlauferhitzers nach einem der vorhergehenden Ansprüche 2 bis 4, **dadurch gekennzeichnet, dass** die Tülle (5) die Form eines vorspringenden Erkers aufweist, dessen vorderste Front, durch die ein Kabel hindurch tretten kann, bezüglich der Trennplatte (2) leicht schräg angeordnet ist.

6. Befestigungsvorrichtung eines elektrischen Durchlauferhitzers nach einem der vorhergehenden Ansprüche, **dadurch gekennzeichnet, dass** der Grundträger (1) des Durchlauferhitzers ein transparentes und/oder transluzentes Material umfasst.

7. Befestigungsvorrichtung eines elektrischen Durchlauferhitzers nach einem der vorhergehenden Ansprüche, **dadurch gekennzeichnet, dass** an dem Grundträger (1) wenigstens ein Wandabstandshalter (8a) bzw. (8b) und/oder ein Montagewerkzeug (9) angespritzt sind.

8. Befestigungsvorrichtung eines elektrischen Durchlauferhitzers nach Anspruch 7, **dadurch gekennzeichnet, dass** der Wandabstandshalter (8a; 8b) und oder das Montagewerkzeug (9) über einen Steg (10) mit einer Sollbruchstelle zum Herausbrechen mit dem Grundträger (1) verbunden sind.

9. Befestigungsvorrichtung eines elektrischen Durchlauferhitzers nach einem der vorhergehenden Ansprüche 2 bis 8, **dadurch gekennzeichnet, dass** die Tülle (5) einen elastomeren Kunststoff umfasst.

## Claims

1. Fastening device of an electrical flow heater, having a base carrier (1) which is provided for fastening to a wall, wherein the base carrier (1) is formed by a housing rear wall, and having a partition plate (2) which can divide the flow heater into a wet chamber (3) and a dry chamber (4), wherein the partition plate (2) is composed of at least two material components which are created in a two-component or multi-component injection moulding process, **characterized in that** the partition plate (2) is moulded onto the base carrier (1) by means of webs (10a, 10b), in such a way that the partition plate (2) can be separated from the base carrier (1) by twisting of the partition plate (2) along the webs (10a, 10b).

2. Fastening device of an electrical flow heater according to Claim 1, **characterized in that** the partition plate (2) and/or the appliance rear wall (1) comprise at least one grommet (5).

3. Fastening device of an electrical flow heater according to Claim 1 or 2, **characterized in that** the partition plate (2) is insertable as an insert part into a housing cover (6) which seals off the electrical flow heater.

4. Fastening device of an electrical flow heater according to one of the preceding claims, **characterized in that** the partition plate (2) is reinforceable by means of ribs (7a, 7b).

5. Fastening device of an electrical flow heater according to one of the preceding Claims 2 to 4, **characterized in that** the grommet (5) has the shape of a projecting bay whose foremost front, through which a cable can pass, is arranged slightly obliquely relative to the partition plate (2).

6. Fastening device of an electrical flow heater according to one of the preceding claims, **characterized in that** the base carrier (1) of the flow heater comprises a transparent and/or translucent material.

7. Fastening device of an electrical flow heater according to one of the preceding claims, **characterized in that** at least one wall spacer (8a) or (8b) and/or an installation tool (9) are moulded onto the base carrier (1).

8. Fastening device of an electrical flow heater according to Claim 7, **characterized in that** the wall spacer (8a; 8b) and/or the installation tool (9) are connected to the base carrier (1) by means of a web (10) with a predetermined breaking point for breaking-out purposes.

9. Fastening device of an electrical flow heater according to one of the preceding Claims 2 to 8, **characterized in that** the grommet (5) comprises an elastomer plastic.

## Revendications

1. Dispositif de fixation d'un chauffe-eau instantané électrique, comprenant un support de base (1) à fixer à un mur, le support de base (1) étant formé par une paroi arrière de boîtier, et une plaque de séparation (2) qui peut diviser le chauffe-eau instantané en un espace mouillé (3) et un espace sec (4), la plaque de séparation (2) se composant d'au moins deux composants matériels produits dans un procédé de moulage par injection multi-composants, **caractérisé en ce que** la plaque de séparation (2) est surmoulée sur le support de base (1) au-dessus d'éléments jointifs (10a, 10b) de telle sorte que la plaque de séparation (2) peut être séparée du support de base (1) par une torsion de la plaque de séparation (2) le long des éléments jointifs (10a, 10b).

2. Dispositif de fixation d'un chauffe-eau instantané électrique selon la revendication 1, **caractérisé en ce que** la plaque de séparation (2) et/ou la paroi arrière d'appareil (1) comprennent au moins une gaine (5).

3. Dispositif de fixation d'un chauffe-eau instantané électrique selon la revendication 1 ou 2, **caractérisé en ce que** la plaque de séparation (2), sous la forme d'une partie enfichable, peut être insérée dans un capot de boîtier (6) qui réalise l'étanchéité du chauffe-eau instantané électrique.

4. Dispositif de fixation d'un chauffe-eau instantané électrique selon l'une des revendications précédentes, **caractérisé en ce que** la plaque de séparation (2) peut être renforcée par des nervures (7a, 7b).

5. Dispositif de fixation d'un chauffe-eau instantané électrique selon l'une des revendications précédentes 2 à 4, **caractérisé en ce que** la gaine (5) possède la forme d'un oriel en saillie dont le front le plus en avant, à travers lequel peut passer un câble, est disposé légèrement en biais par rapport à la plaque de séparation (2).

6. Dispositif de fixation d'un chauffe-eau instantané électrique selon l'une des revendications précédentes, **caractérisé en ce que** le support de base (1) du chauffe-eau instantané comprend un matériau transparent et/ou translucide.

7. Dispositif de fixation d'un chauffe-eau instantané électrique selon l'une des revendications précédentes, **caractérisé en ce qu'**au moins une entretoise murale (8a) ou (8b) et/ou un outil de montage (9) est surmoulé par injection sur le support de base (1).

8. Dispositif de fixation d'un chauffe-eau instantané électrique selon la revendication 7, **caractérisé en ce que** l'entretoise murale (8a ; 8b) et/ou l'outil de montage (9) sont reliés au support de base (1) par le biais d'un élément jointif (10) muni d'un point de rupture voulu destiné à la cassure.

9. Dispositif de fixation d'un chauffe-eau instantané électrique selon l'une des revendications précédentes 2 à 8, **caractérisé en ce que** la gaine (5) comprend une matière plastique élastomère.
